# EUROPEAN PATENT SPECIFICATION

(11) **EP 2 704 289 B1**
(45) Date of publication and mention of the grant of the patent: **22.05.2019**
(21) Application number: 13176641.2
(22) Date of filing: 16.07.2013
(51) Int. Cl.: H02J 7/00

(54) **Battery protection circuit and battery pack including the same**
Batterieschutzschaltung und Batteriepack damit
Circuit de protection de batterie et bloc-batterie l'incluant

(30) Priority: 04.09.2012 US 201261696672 P; 28.05.2013 US 201313903870
(43) Date of publication of application: 05.03.2014
(73) Proprietor: Samsung SDI Co., Ltd., Yongin-si, Gyeonggi-do (KR)
(72) Inventor: Ji, Se-Jin, Gyeonggi-do (KR)
(74) Representative: Mounteney, Simon James

(56) References cited:
- US-A1- 2010 141 215
- US-B1- 6 492 791

## Description

### BACKGROUND

### 1. Field

An aspect of the present invention relates to a a battery pack including a battery protection circuit, and more particularly, to battery pack including a battery pack protection circuit that is provided with a terminal capable of being connected to a gate electrode of a transistor for charging/discharging control, so that the turn-on resistance of the transistor for charging/discharging control can be easily changed, and accordingly, efficient battery management is possible.

### 2. Description of the Related Art

Recently, portable electronic/electrical devices which are compact in size and light in weight, such as a cellular phone, a notebook computer and a camcorder, have been actively developed and produced. The portable electronic/electrical devices have batteries built therein so as to be operated in a place where a separate power source is not provided.

However, damage of a battery may occur due to its ignition, rupture or explosion in the situation of overcharging, overdischarging, overcurrent caused by a short circuit between terminals because of chemical properties of the battery.

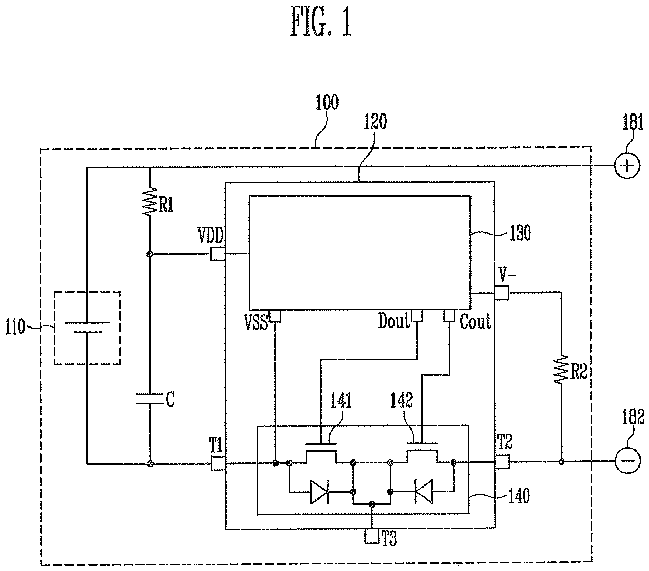

Therefore, as can be seen in a related art battery pack 100 shown in FIG. 1, a battery protection circuit 120 that protects a bare cell 110 by detecting overcharging, overcurrent and over discharging of the bare cell 110 is provided, together with the bare cell 110, to the related art battery pack 100.

The battery protection circuit 120 may be manufactured in the form of an integrated circuit (IC) chip. The battery protection circuit 120 includes a control IC 130 and a switching unit 140 therein, so as to perform a protecting operation of the bare cell 110.

Generally, the switching unit 140 is configured to include a transistor 141 for discharging control and a transistor 142 for charging control, which are controlled by the control IC 130.

As can be seen in FIG. 1, the related art battery protection circuit 120 is provided with separate terminals T1, T2 and T3 through which external connection to source/drain electrodes of each of the transistors 141 and 142 for charging/discharging control is possible.

However, the related art battery protection circuit 120 is not provided with a separate external terminal for electrical connection to a gate electrode of each of the transistors 141 and 142 for charging/discharging control.

The gate electrodes of the transistors 141 and 142 for charging/discharging control are necessarily controlled to adjust the internal resistance of the battery pack 100. However, since the gate electrodes of the transistors 141 and 142 for charging/discharging control are not exposed to the outside, there exists a problem in that the turn-on resistance of the transistors 141 and 142 for charging/discharging control cannot be changed.

US2010/0141215 discloses a battery protection circuit with electrodes DOUT and COUT to control external charge and discharge transistors.

### SUMMARY

Embodiments provide a battery pack including a battery protection circuit that is provided with a terminal capable of being connected to a gate electrode of a transistor for charging/discharging control, so that the turn-on resistance of the transistor for charging/discharging control can be easily changed, and accordingly, efficient battery management is possible.

The present invention provides a battery pack according to claim 1.

Preferred features of the present invention are recited in claims 2 to 13.

Hence, according to the present invention, it is possible to provide a battery protection circuit and a battery pack including the same that is provided with a terminal capable of being connected to a gate electrode of a transistor for charging/discharging control, so that the turn-on resistance of the transistor for charging/discharging control can be easily changed, and accordingly, efficient battery management is possible.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a circuit diagram showing a related art battery pack.
FIG. 2 is a circuit diagram showing a battery pack according to an embodiment of the present invention.
FIG. 3 is a circuit diagram showing a configuration of a control IC according to the embodiment of the present invention.
FIG. 4 is a circuit diagram showing a battery pack according to another embodiment of the present invention.

### DETAILED DESCRIPTION

Hereinafter, certain embodiments according to the present invention will be described with reference to the accompanying drawings. Here, when a first element is described as being connected to a second element, the first element may be not only directly connected to the second element but may also be indirectly connected to the second element via a third element. Further, some of the elements that are not essential to the complete understanding of the invention are omitted for clarity. Also, like reference numerals refer to like elements throughout.

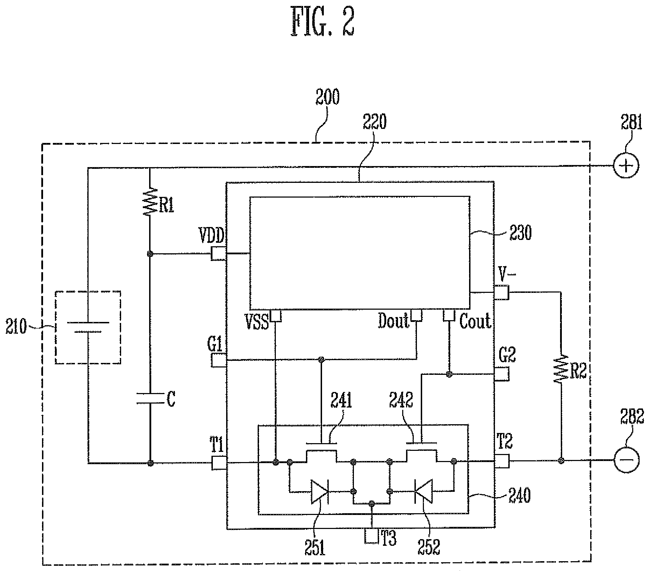

FIG. 2 is a circuit diagram showing a battery pack according to an embodiment of the present invention.

Referring to FIG. 2, the battery pack 200 according to this embodiment includes a bare cell 210 and a battery protection circuit 220.

The bare cell 210 is provided with at least one bare cell, and a plurality of bare cells 210 may be connected in series and/or parallel.

Positive and negative electrode terminals 281 and 282 connected to a charger (not shown), electronic product (not shown), or the like are formed on a high current path of the bare cell 210.

The battery protection circuit 220 is used to solve a problem that occurs due to an abnormal state (overcharging, overdischarging, overcurrent or the like) of the bare cell 210. The battery protection circuit 220 is connected to the bare cell 210 so as to perform a protecting operation of the bare cell 210.

The battery protection circuit 220 is manufactured in the form of an integrated circuit (IC) chip.

Referring FIG. 2, the battery protection circuit 220 according to this embodiment includes a control IC 230 and a switching unit 240.

The control IC 230 performs a function of detecting the presence of abnormality of the bare cell 210. For example, the control IC 230 may detect an abnormal state of the bare cell 210, such as overcharging, overdischarging or over current.

The control IC 230 also controls a charging/discharging state of the bare cell 210 by controlling the switching unit 240.

The switching unit 240 includes at least one transistor for controlling the charging/discharging of the bare cell 210, and the operation of the switching unit 240 is controlled by the control IC 230.

A control electrode of the at least one transistor included in the switching unit 240 is preferably connected to a connection terminal of the battery protection circuit 220, which is exposed to an outside of the battery protection circuit 220.

The switching unit 240 preferably includes a transistor 241 for discharging control and a transistor 242 for charging control, which will be described as an example.

In the present embodiment the transistors in the switching unit are FET transistors, therefore the control electrode are gate electrodes. However, the transistors may be bipolar junction transistors, in which case the control electrodes are base electrodes.

In this case, a gate electrode of the transistor 241 for discharging control is connected to a first gate connection terminal G1 of the battery protection circuit 220, which is exposed to the outside, and a gate electrode of the transistor 242 for charging control is connected to a second gate connection terminal G2 of the battery protection circuit 220, which is exposed to the outside.

That is, as can be seen in FIG. 1, the gate electrodes of the transistors 141 and 142 included in the switching unit 140 are merely connected to the control IC 130 in the related art battery protection circuit 120.

Accordingly, the connection to the gate electrodes of the transistors 141 and 142 from the outside cannot be performed, and therefore, the gate electrodes of the transistors 141 and 142 cannot be controlled from the outside so as to adjust internal resistance, or the like.

On the other hand, in the present invention, the gate electrodes of the transistors 241 and 242 included in the switching unit 240 are exposed to the outside through the respective gate connection terminals G1 and G2, and thus the turn-on resistance of each of the transistors 241 and 242 can be easily changed.

The connection relationship between the transistor 241 for discharging control and the transistor 242 for charging control will be described. A first electrode of the transistor 241 for discharging control is connected to a first terminal T1 of the battery protection circuit 220, which is exposed to the outside, and a second electrode of the transistor 241 for discharging control is connected to a second electrode of the transistor 242 for charging control.

A first electrode of the transistor 242 for charging control is connected to a second terminal T2 of the battery protection circuit 220, which is exposed to the outside.

For example, the first and second electrodes of the transistor 241 for discharging control may be set to source and drain electrodes, respectively. The first and second electrodes of the transistor 242 for charging control may be set to source and drain electrodes, respectively.

The transistor 241 for discharging control and the transistor 242 for charging control are provided with diodes 251 and 252 connected in parallel thereto, respectively. Thus, power can be supplied to the transistor 241 for discharging control and the transistor 242 for charging control through the respective diodes 251 and 252 in the charging or discharging of the transistor 241 for discharging control and the transistor 242 for charging control, in which any one of the transistor 241 for discharging control and the transistor 242 for charging control is turned off.

The second electrode of the transistor 241 for discharging control and the second electrode of the transistor 242 for charging control are connected to a third terminal T3 of the battery protection circuit 220, which is exposed to the outside.

The transistor 241 for discharging control and the transistor 242 for charging control may be formed as N-MOS or P-MOS transistors, or as bipolar junction transistors.

Briefly speaking, the battery protection circuit according to this embodiment is additionally provided with the first and second gate connection terminals G1 and G2 together with the first, second and third terminals T1, T2 and T3.

In this case, the first terminal T1 is connected to a negative electrode of the bare cell 210, and the second terminal T2 is connected to the negative electrode terminal 282 of the battery pack 200.

The battery protection circuit 220 is provided with a power terminal VDD connected to a positive electrode of the bare cell 210 and an auxiliary terminal V- connected to the negative electrode terminal 282 of the battery pack 200.

A resistor R1 is provided between the positive electrode of the bare cell 210 and the power terminal VDD.

A capacitor C is provided between the power terminal VDD and the first terminal T1 of the battery protection circuit 220.

A resistor R2 is provided between the auxiliary terminal V- and the negative electrode terminal 282 of the battery pack 200.

Here, the first and second gate connection terminals G1 and G2 are formed at positions opposite to each other for convenience of circuit design.

That is, in a case where the first gate connection terminal G1 is formed at one side of the battery protection circuit 220, the second gate connection terminal G2 is formed at the other side of the battery protection circuit 220.

The first terminal T1 is formed adjacent to the first gate connection terminal G1, and the second terminal T2 is also formed adjacent to the second gate connection terminal G2.

For example, as shown in FIG. 2, the power terminal VDD, the first gate connection terminal G1 and the first terminal T1 are sequentially positioned at the one side of the battery protection circuit 220 from the top of this figure, and the auxiliary terminal V-, the second gate connection terminal G2 and the second terminal T2 are sequentially positioned at the other side of the battery protection circuit 220 from the top of this figure.

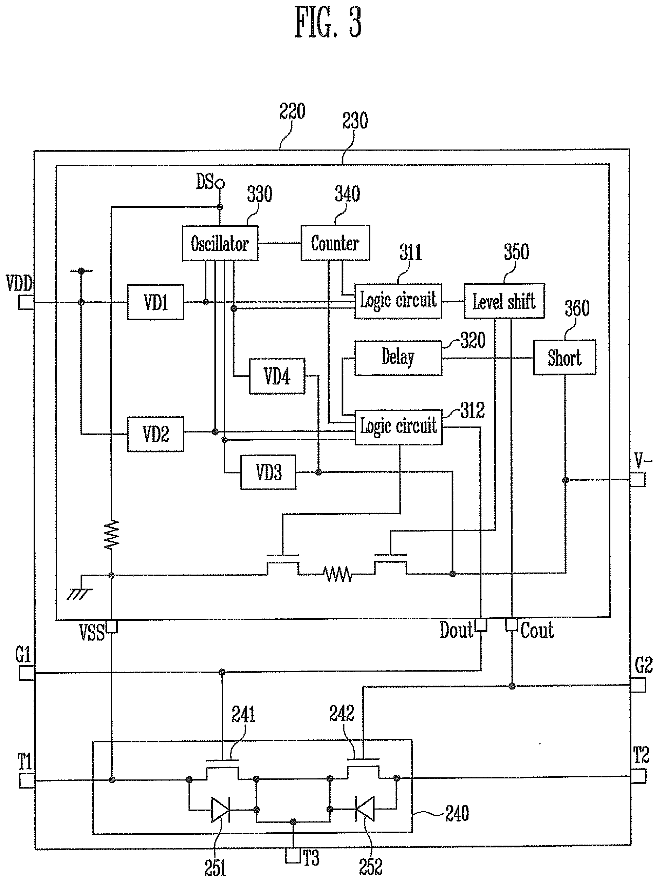

FIG. 3 is a circuit diagram showing a configuration of the control IC according to the embodiment of the present invention.

Referring to FIG. 3, the control IC 230 according to this embodiment includes an overcharging detection unit VD1 that detects the presence of overcharging of the bare cell 210, an overdischarging detection unit VD2 that detects the presence of overdischarging of the bare cell 210, discharging and charging overcurrent detection units VD3 and VD4 that detect the presence of overcurrent of the bare cell 210, a first logic circuit 311, a second logic circuit 312, a delay circuit 320, an oscillator 330, a counter 340, a level shift circuit 350, a short detection circuit 360, and the like.

The control IC 230 is connected to the power and auxiliary terminals VDD and V- of the battery protection circuit 220. The control IC 230 is provided with a ground terminal VSS, a discharging control terminal Dout and a charging control terminal Cout, which are connected to the switching unit 240. The control IC 230 is provided with a DS terminal connected to the oscillator 330.

Specifically, the ground terminal VSS of the control IC 230 are connected to the first terminal T1 and the first electrode of the transistor 241 for discharging control included in the switching unit 240, and the discharging control terminal Dout is connected to the first gate connection terminal G1 and the gate electrode of the transistor 241 for discharging control included in the switching unit 240. The charging control terminal Cout is connected to the second gate connection terminal G2 and the gate electrode of the transistor 242 for charging control included in the switching unit 240.

Hereinafter, basic operations performed by the battery protection circuit 220 will be described.

If overcharging, overdischarging, discharging overcurrent, charging overcurrent or short circuit is detected by the overcharging detection unit VD1, the overdischarging detection unit VD2, the discharging overcurrent detection unit VD3, the charging overcurrent detection unit VD4 or the short detection circuit 360, the oscillator 330 is activated, and the counter 340 starts counting operations.

In a case where the overcharging or charging overcurrent is detected, a predetermined detection delay time is measured through the counter 340, and the output of the charging control terminal Cout is then switched to a low level through the logic circuit 311 and the level shift circuit 350. Therefore, the transistor 242 for charging control may be turned off.

In a case where the overdischarging, discharging overcurrent or short circuit is detected, the output of the discharging control terminal Dout is switched to a low level through the logic circuit 312. Therefore, the transistor 241 for charging control may be turned off.

The configuration and operation of the control IC 230 described above is merely an embodiment, and may be variously modified.

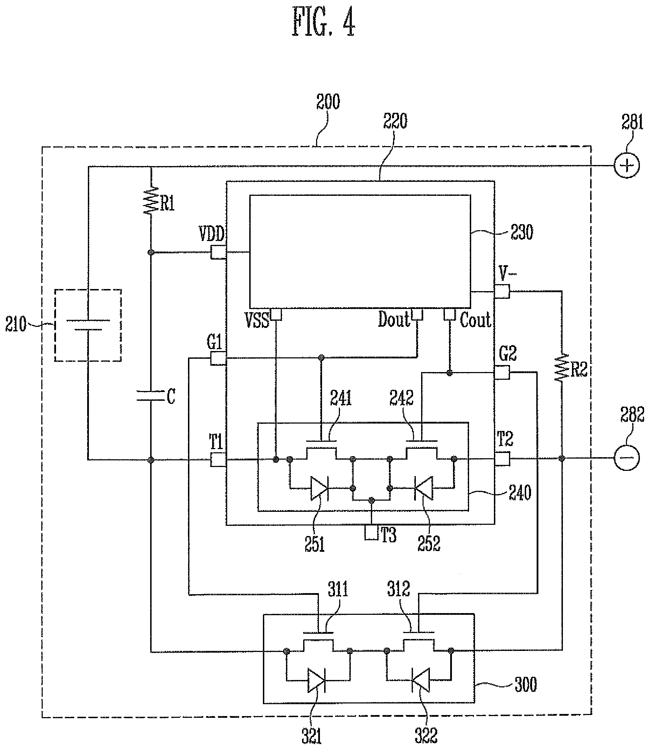

FIG. 4 is a circuit diagram showing a battery pack according to another embodiment of the present invention.

Referring to FIG. 4, the battery pack 200 according to this embodiment further includes an auxiliary switching unit 300.

The auxiliary switching unit 300 is provided to adjust the internal resistance of the battery pack 200, i.e., the resistance of the switching unit 240 on the high current path. The auxiliary switching unit 300 includes at least one transistor connected in parallel to the transistor 241 for discharging control and the transistor 242 for charging control, which are included in the switching unit 240.

In this case, the auxiliary switching unit 300 is preferably configured in the same form as the switching unit 240. Accordingly, the auxiliary switching unit 300 includes a first transistor 311 and a second transistor 312.

The first and second transistors 311 and 312 are connected in series between the first and second terminals T1 and T2 so as to be positioned in parallel to the transistor 241 for discharging control and the transistor 242 for charging control.

Specifically, a first electrode of the first transistor 311 is connected to the first terminal T1, and a second electrode of the first transistor 311 is connected to a second electrode of the second transistor 312.

A first electrode of the second transistor 312 is connected to the second terminal T2.

For example, the first and second electrodes of the first transistor 311 may be set to source and drain electrodes, respectively. The first and second electrodes of the second transistor 312 may be set to source and drain electrodes, respectively.

In order to perform the same function as the switching unit 240, the auxiliary switching unit 300 is provided with auxiliary diodes 321 and 322 respectively connected in parallel to the first and second transistors 311 and 312.

In order to perform the same operation as the transistor 241 for discharging control, a control electrode of the first transistor 311 may be connected to the first gate connection terminal G1.

In order to perform the same operation as the transistor 242 for charging control, a control electrode of the second transistor 312 may be connected to the second gate connection terminal G2.

In this embodiment, the first and second transistors 311, 312 are FET transistors, and therefore the control electrodes are gate electrodes. However, the first and second transistors 311, 312 may be bipolar junction transistors, in which case the control electrodes are base electrodes.

Although one switching unit 240 is illustrated in FIG. 4, the number of switching units 240 may be variously changed.

Accordingly, the separate gate connection terminals G1 and G2 are added to the battery protection circuit 220, so that the auxiliary switching unit 300 for adjusting the internal resistance of the battery pack 200 can be easily added to the battery pack 200 without changing the form of the battery protection circuit 220 manufactured in the form of the IC chip.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A battery pack including:
at least one bare cell (210); and
a battery protection circuit (220) formed as an IC chip, the battery protection circuit (220) comprising:
a switching unit (240) including at least one transistor (241, 242) configured to control charging/discharging of the bare cell (210); and
a control circuit (230) configured to monitor a state of the bare cell (210) and control the operation of the switching unit (240);
wherein a charging control terminal (Cout) or a discharging control terminal (Dout) of the control circuit (230) is connected to a control electrode of the at least one transistor (241, 242) and to a connection terminal (G1, G2) of the battery protection circuit that is exposed to an outside of the battery protection circuit (220) for charging or discharging control.

2. A battery pack according to claim 1, wherein the switching unit comprises a first transistor (241) configured to control discharging and a second transistor (242) configured to control charging.

3. A battery pack according to claim 2, wherein a first control electrode of the first transistor (241) and the said discharging control terminal (Dout) are connected to a first said connection terminal (G1) of the battery protection circuit, and a second control electrode of the second transistor (242) and the said charging control terminal (Cout) are connected to a second said connection terminal (G2) of the battery protection circuit.

4. A battery pack according to claim 2 or 3, wherein a first electrode of the first transistor (241) is connected to a first terminal (T1) of the battery protection circuit which is exposed to the outside, and a second electrode of the second transistor (242) is connected to a second electrode of the first transistor (241).

5. A battery pack according to claim 4, wherein a first electrode of the second transistor (242) is connected to a second terminal (T2) of the battery protection circuit, which is exposed to the outside.

6. A pack according to claim 4 or 5, wherein the second electrode of the first transistor (241) and the second electrode of the second transistor (242) are connected to a third terminal (T3) of the battery protection circuit, which is exposed to the outside.

7. A battery pack according to any one of claims 4 to 6, wherein the first terminal (T1) is formed adjacent to the first connection terminal (G1), and the second terminal (T2) is formed adjacent to the second connection terminal (G2).

8. A battery pack according to any one of claims 3 to 7, wherein the first connection terminal (G1) is formed at one side of the battery protection circuit, and the second connection terminal (G2) is formed at the other side of the battery protection circuit.

9. A battery pack according to any one of claims 3 to 7, wherein the first connection terminal (G1) is formed at one central portion of the battery protection circuit, and the second connection terminal (G2) is formed at the other central portion of the battery protection circuit.

10. A battery pack according to any one of the preceding claims, further comprising an auxiliary switching unit (300) comprising an auxiliary transistor (311) connected in parallel to the first transistor.

11. A battery pack according to claim 10 when dependent upon claim 3, wherein the auxiliary switching unit comprises first and second auxiliary transistors (311, 312), and the first and second auxiliary transistors have their control electrodes connected to the first and second connection terminals respectively.

12. A battery pack according to claim 11 when dependent on any one of claims 4 to 7, wherein the first and second auxiliary transistors (311, 312) are connected in series between the first and second terminals (T1, T2).

13. A battery pack according to claim 12, wherein a first electrode of the first auxiliary transistor (311) is connected to the first terminal (T1), and a second electrode of the first auxiliary transistor is connected to a second electrode of the second auxiliary transistor (312), and a first electrode of the second auxiliary transistor is connected to the second terminal (T2).

## Patentansprüche

1. Ein Batteriepack, einschließend:
mindestens eine nackte Zelle (210); und
eine Batterieschutzschaltung (220), die als IC-chip ausgebildet ist, wobei die Batterieschutzschaltung (220) umfasst:
eine Schalteinheit (240), die mindestens einen Transistor (241, 242) einschließt, der dafür konfiguriert ist, das Laden/Entladen der nackten Zelle (210) zu steuern; und
eine Steuerungsschaltung (230), die dafür konfiguriert ist, einen Zustand der nackten Zelle (210) zu überwachen und den Betrieb der Schalteinheit (240) zu steuern;
worin zur Lade- oder Entladesteuerung ein Ladesteueranschluss (Cout) oder ein Entladesteueranschluss (Dout) der Steuerungsschaltung (230) mit einer Steuerelektrode des mindestens einen Transistors (241, 242) und mit einem Verbindungsanschluss (G1, G2) der Batterieschutzschaltung, der zur Außenseite der Batterieschutzschaltung (220) hin freiliegt, verbunden wird.

2. Batteriepack nach Anspruch 1, worin die Schalteinheit einen ersten Transistor (241), der dafür konfiguriert ist, das Entladen zu steuern, und einen zweiten Transistor (242), der dafür konfiguriert ist, das Laden zu steuern, umfasst.

3. Batteriepack nach Anspruch 2, worin eine erste Steuerelektrode des ersten Transistors (241) und der besagte Entladesteueranschluss (Dout) mit einem ersten besagten Verbindungsanschluss (G1) der Batterieschutzschaltung verbunden sind und eine zweite Steuerelektrode des zweiten Transistors (242) und der besagte Ladesteueranschluss (Cout) mit einem zweiten besagten Verbindungsanschluss (G2) der Batterieschutzschaltung verbunden sind.

4. Batteriepack nach Anspruch 2 oder 3, worin eine erste Elektrode des ersten Transistors (241) mit einem ersten Anschluss (T1) der Batterieschutzschaltung verbunden ist, der nach außen hin freiliegt, und eine zweite Elektrode des zweiten Transistors (242) mit einer zweiten Elektrode des ersten Transistors (241) verbunden ist.

5. Batteriepack nach Anspruch 4, worin eine erste Elektrode des zweiten Transistors (242) mit einem zweiten Anschluss (T2) der Batterieschutzschaltung verbunden ist, der nach außen hin freiliegt.

6. Packung nach Anspruch 4 oder 5, worin die zweite Elektrode des ersten Transistors (241) und die zweite Elektrode des zweiten Transistors (242) mit einem dritten Anschluss (T3) der Batterieschutzschaltung verbunden sind, der nach außen hin freiliegt.

7. Batteriepack nach einem der Ansprüche 4 bis 6, worin der erste Anschluss (T1) angrenzend an den ersten Verbindungsanschluss (G1) ausgebildet ist und der zweite Anschluss (T2) angrenzend an den zweiten Verbindungsanschluss (G2) ausgebildet ist.

8. Batteriepack nach einem der Ansprüche 3 bis 7, worin der erste Verbindungsanschluss (G1) auf einer Seite der Batterieschutzschaltung und der zweite Verbindungsanschluss (G2) auf der anderen Seite der Batterieschutzschaltung ausgebildet ist.

9. Batteriepack nach einem der Ansprüche 3 bis 7, worin der erste Verbindungsanschluss (G1) an einem zentralen Abschnitt der Batterieschutzschaltung ausgebildet ist und der zweite Verbindungsanschluss (G2) am anderen zentralen Abschnitt der Batterieschutzschaltung ausgebildet ist.

10. Batteriepack nach einem der vorhergehenden Ansprüche, ferner eine Hilfsschalteinheit (300) umfassend, die einen Hilfstransistor (311) umfasst, der parallel zum ersten Transistor geschaltet ist.

11. Batteriepack nach Anspruch 10, wenn abhängig von Anspruch 3, worin die Hilfsschalteinheit erste und zweite Hilfstransistoren (311, 312) umfasst und die Steuerelektroden des ersten und des zweiten Hilfstransistoren mit dem ersten bzw. dem zweiten Verbindungsanschluss verbunden sind.

12. Batteriepack nach Anspruch 11, wenn abhängig von einem der Ansprüche 4 bis 7, worin der erste und der zweite Hilfstransistor (311, 312) zwischen dem ersten und dem zweiten Anschluss (T1, T2) in Reihe geschaltet sind.

13. Batteriepack nach Anspruch 12, worin eine erste Elektrode des ersten Hilfstransistors (311) mit dem ersten Anschluss (T1) verbunden ist und eine zweite Elektrode des ersten Hilfstransistors mit einer zweiten Elektrode des zweiten Hilfstransistors (312) verbunden ist und eine erste Elektrode des zweiten Hilfstransistors mit dem zweiten Anschluss (T2) verbunden ist.

## Revendications

1. Bloc-batterie incluant :
au moins une cellule nue (210) ; et
un circuit de protection de batterie (220) qui est formé en tant que puce IC, le circuit de protection de batterie (220) comprenant :
une unité de commutation (240) qui inclut au moins un transistor (241, 242) qui est configuré de manière à ce qu'il commande la charge/la décharge de la cellule nue (210) ; et
un circuit de commande (230) qui est configuré de manière à ce qu'il surveille un état de la cellule nue (210) et de manière à ce qu'il commande le fonctionnement de l'unité de commutation (240) ;
dans lequel une borne de commande de charge (Cout) ou une borne de commande de décharge (Dout) du circuit de commande (230) est connectée à une électrode de commande de l'au moins un transistor (241, 242) et à une borne de connexion (G1, G2) du circuit de protection de batterie qui est exposée sur un extérieur du circuit de protection de batterie (220) pour une commande de charge ou de décharge.

2. Bloc-batterie selon la revendication 1, dans lequel l'unité de commutation comprend un premier transistor (241) qui est configuré de manière à ce qu'il commande la décharge et un second transistor (242) qui est configuré de manière à ce qu'il commande la charge.

3. Bloc-batterie selon la revendication 2, dans lequel une première électrode de commande du premier transistor (241) et ladite borne de commande de décharge (Dout) sont connectées à une première dite borne de connexion (G1) du circuit de protection de batterie, et une seconde électrode de commande du second transistor (242) et ladite borne de commande de charge (Cout) sont connectées à une seconde dite borne de connexion (G2) du circuit de protection de batterie.

4. Bloc-batterie selon la revendication 2 ou 3, dans lequel une première électrode du premier transistor (241) est connectée à une première borne (T1) du circuit de protection de batterie, laquelle est exposée sur l'extérieur, et une seconde électrode du second transistor (242) est connectée à une seconde électrode du premier transistor (241).

5. Bloc-batterie selon la revendication 4, dans lequel une première électrode du second transistor (242) est connectée à une deuxième borne (T2) du circuit de protection de batterie, laquelle est exposée sur l'extérieur.

6. Bloc-batterie selon la revendication 4 ou 5, dans lequel la seconde électrode du premier transistor (241) et la seconde électrode du second transistor (242) sont connectées à une troisième borne (T3) du circuit de protection de batterie, laquelle est exposée sur l'extérieur.

7. Bloc-batterie selon l'une quelconque des revendications 4 à 6, dans lequel la première borne (T1) est formée de manière à ce qu'elle soit adjacente à la première borne de connexion (G1), et la deuxième borne (T2) est formée de manière à ce qu'elle soit adjacente à la seconde borne de connexion (G2).

8. Bloc-batterie selon l'une quelconque des revendications 3 à 7, dans lequel la première borne de connexion (G1) est formée au niveau d'un côté du circuit de protection de batterie, et la seconde borne de connexion (G2) est formée au niveau de l'autre côté du circuit de protection de batterie.

9. Bloc-batterie selon l'une quelconque des revendications 3 à 7, dans lequel la première borne de connexion (G1) est formée au niveau d'une partie centrale du circuit de protection de batterie, et la seconde borne de connexion (G2) est formée au niveau de l'autre partie centrale du circuit de protection de batterie.

10. Bloc-batterie selon l'une quelconque des revendications qui précèdent, comprenant en outre une unité de commutation auxiliaire (300) qui comprend un transistor auxiliaire (311) qui est connecté en parallèle au premier transistor.

11. Bloc-batterie selon la revendication 10 lorsqu'elle dépend de la revendication 3, dans lequel l'unité de commutation auxiliaire comprend des premier et second transistors auxiliaires (311, 312), et les premier et second transistors auxiliaires ont leurs électrodes de commande qui sont respectivement connectées aux première et seconde bornes de connexion.

12. Bloc-batterie selon la revendication 11 lorsqu'elle dépend de l'une quelconque des revendications 4 à 7, dans lequel les premier et second transistors auxiliaires (311, 312) sont connectés en série entre les première et deuxième bornes (T1, T2).

13. Bloc-batterie selon la revendication 12, dans lequel une première électrode du premier transistor auxiliaire (311) est connectée à la première borne (T1), et une seconde électrode du premier transistor auxiliaire est connectée à une seconde électrode du second transistor auxiliaire (312), et une première électrode du second transistor auxiliaire est connectée à la deuxième borne (T2).
